# EUROPÄISCHE PATENTSCHRIFT

(11) **EP 3 433 892 B1**
(45) Veröffentlichungstag und Bekanntmachung des Hinweises auf die Patenterteilung: **29.04.2020**
(21) Anmeldenummer: 17706245.2
(22) Anmeldetag: 21.02.2017
(51) Int. Cl.: H01M 2/34, H01M 10/48

(54) **ZELLE FÜR EINEN ELEKTRISCHEN ENERGIESPEICHER**
CELL FOR ELECTRICAL STORAGE UNIT
CELLULE POUR L'UNITÉ DE STOCKAGE ÉLECTRIQUE

(30) Priorität: 23.03.2016 DE 102016204842
(43) Veröffentlichungstag der Anmeldung: 30.01.2019
(73) Patentinhaber: Bayerische Motoren Werke Aktiengesellschaft, 80809 München (DE)
(72) Erfinder: ZEILINGER, Tobias, 80801 München (DE); RÖSSLER, Stefan, 89081 Ulm (DE); STERN, Rainer, 89081 Ulm (DE)
(86) Internationale Anmeldenummer: PCT/EP2017/053826
(87) Internationale Veröffentlichungsnummer: WO 2017/162385

(56) Entgegenhaltungen:
- DE-A1-102008 020 912
- DE-A1-102010 044 455
- DE-A1-102012 210 151
- DE-A1-102012 213 053
- DE-A1-102013 200 923

## Beschreibung

Die Erfindung betrifft eine Zelle für einen elektrischen Energiespeicher, mit einem Zellengehäuse, innerhalb welchem eine Elektrode angeordnet ist und an welchem außenseitig ein Terminal angeordnet ist, welches mit der Elektrode galvanisch verbunden ist, wobei in einem Strompfad zwischen dem Terminal und der Elektrode ein Sicherungselement angeschlossen ist, zur galvanischen Trennung der Elektrode und des Terminals.

Eine solche Zelle ist beispielsweise in der DE 10 2012 210 151 A1 beschrieben. Weitere Batteriezellen sind beschrieben in DE 10 2012 213 053 A1, DE 10 2013 200923 A1, DE 10 2008 020 912 A1.

Üblicherweise werden mehrere Zellen miteinander seriell und/oder parallel verschaltet und bilden dann eine Batterie oder einen Akkumulator, allgemein einen elektrischen Energiespeicher. Je nach Anzahl und Verschaltung der Zellen lassen sich verschiedene Spannungen, Ströme und Energiekapazitäten realisieren. In einer beispielhaften Ausgestaltung ist der Energiespeicher ein sogenannter Hochvoltspeicher, welcher in einem Elektro- oder Hybridfahrzeug verbaut ist und zur Energieversorgung eines elektrischen Antriebs des Fahrzeugs dient.

Ein Energiespeicher ist beispielsweise als Li-Ionen-Akkumulator ausgebildet und weist üblicherweise mehrere, zumindest jedoch eine Zelle auf, welche als grundlegendes Bauteil die elektrischen Eigenschaften des Energiespeichers bestimmt. Die Zelle umfasst zwei Elektroden, z.B. eine aus Kupfer und ein aus Aluminium, auf welche jeweils ein aktives Material häufig schichtartig aufgetragen ist, zur Energiespeicherung. Üblicherweise sind die beiden beschichteten Elektroden durch einen sogenannten Separator voneinander beabstandet. Die Elektroden sind typischerweise flächig als Platten oder Folien ausgestaltet und können entweder in einem Stapel angeordnet sein oder gemeinsam aufgewickelt sein. Die Elektroden sind in einem Zellengehäuse eingehaust, welches vor Allem auch einen mechanischen Schutz bietet. Zur elektrischen Kontaktierung der Zelle sind die Elektroden innerhalb des Zellengehäuses typischerweise jeweils an einen Ableiter angeschlossen, welcher durch das Zellengehäuse hindurch auf dessen Außenseite geführt ist und dort mit einem Terminal, d.h. einem Zellenanschluss, verbunden ist. Über die beiden Terminals kann dann Energie ab- oder zugeführt werden. Bei einem Energiespeicher mit mehreren Zellen werden die Zellen an den Terminals zusammengeschlossen und miteinander verschaltet.

Besonders bei Li-Ionen-Akkumulatoren, jedoch auch allgemein bei elektrischen Energiespeichern, wird sinnvollerweise ein elektrisches Sicherungselement angeordnet, um bei einem Ausfall oder Fehlverhalten des Energiespeichers die elektrische Verbindung zu unterbrechen und eine weitere Beschädigung, z.B. durch ein Abbrennen oder Explodieren einer oder mehrerer Zellen zu verhindern.

So wird beispielsweise in der eingangs zitierten DE 10 2012 210 151 A1 eine Batteriezelle beschrieben, welche zwei Elektroden aufweist, die in einem Gehäuse untergebracht sind und jeweils mit einem Terminal außerhalb des Gehäuses verbunden sind. Innerhalb des Gehäuses ist im Strompfad zwischen einer der Elektroden und dem zugehörigen Terminal eine Schmelzsicherung angeschlossen, welche ein Teil einer Stromunterbrechungsvorrichtung ist und welche bei einem unzulässig hohen Strom schmilzt und dadurch den Strompfad unterbricht.

In der DE 10 2010 044 455 A1 wird dagegen eine Schmelzsicherung beschrieben, welche nicht ein Teil einer jeweiligen Zelle ist, sondern als Verbindungselement dient, um die Terminals zweier Zellen elektrisch miteinander zu verbinden und dadurch eine Serien- oder Parallelschaltung der Zellen zu realisieren.

Vor diesem Hintergrund ist es eine Aufgabe der Erfindung, eine hinsichtlich des Sicherungselements verbesserte Zelle anzugeben.

Die Aufgabe wird erfindungsgemäß gelöst durch eine Zelle mit den Merkmalen gemäß Anspruch 1. Vorteilhafte Ausgestaltungen, Weiterbildungen und Varianten sind Gegenstand der Unteransprüche.

Die Zelle ist zur Verwendung in einem elektrischen Energiespeicher ausgebildet, d.h. einer Batterie oder einem Akkumulator, z.B. einem Li-Ionen-Akkumulator. Die Zelle weist ein Zellengehäuse auf, innerhalb welchem eine Elektrode angeordnet ist und an welchem außenseitig ein Terminal angeordnet ist, welches mit der Elektrode galvanisch verbunden ist. Dabei ist in einem Strompfad zwischen dem Terminal und der Elektrode ein elektrisches Sicherungselement angeschlossen, zur galvanischen Trennung der Elektrode und des Terminals. Das Sicherungselement ist außerhalb des Zellengehäuses angeordnet.

Das Sicherungselement ist somit ein externes Sicherungselement der Zelle. Durch die Anordnung des Sicherungselements außerhalb des Zellengehäuses ergeben sich wesentliche Vorteile vor Allem im Vergleich zu einer Zelle mit einem innerhalb des Zellengehäuses untergebrachten Sicherungselement. Die Vorteile ergeben sich insbesondere hinsichtlich der Handhabung der Zelle nach einem Auslösen des Sicherungselements. Zum Einen ist der Zelle von außen ohne Weiteres und insbesondere augenscheinlich anzusehen, ob das Sicherungselement ausgelöst hat oder noch intakt ist. Dies ist besonders bei einem Energiespeicher von Vorteil, welcher aus einer Vielzahl an miteinander verschalteten Zellen zusammengesetzt ist. Zum Anderen ist es auch nach dem Auslösen des Sicherungselement noch möglich, den Ladezustand der Zelle zu bestimmen und diese ggf. auch kontrolliert zu entladen. Das Terminal kann hierzu zwar nicht mehr verwendet werden, da dieses von der zugehörigen Elektrode nunmehr getrennt ist, jedoch ist durch die bezüglich des Zellengehäuses externe Anordnung des Sicherungselements weiterhin eine Kontaktierung der Elektrode von außerhalb des Zellengehäuses aus möglich. Da das Sicherungselement an einer Seite an die Elektrode angeschlossen ist und diese Seite auch nach dem Auslösen noch galvanisch mit der Elektrode verbunden ist, ergibt sich an dieser Seite ein externer Anschlusspunkt, über welchen der Ladezustand der Zelle auf einfache Weise kontrolliert werden kann und über welchen die Zelle ggf. auch nachträglich noch entladen werden kann.

Allgemein weist die Zelle zwei Elektroden auf, welche jeweils mit einem Terminal der Zelle verbunden sind, sodass die Zelle insgesamt zweipolig ausgebildet ist. Die Terminals bilden dabei Endpunkte eines Strompfads durch die Zelle. Die Terminals dienen somit der Kontaktierung der Zelle und insbesondere der Verbindung mit anderen Zellen. Die Elektroden sind beispielsweise als beschichtete Metallfolien oder Platten ausgeführt, welche in einem Stapel angeordnet sind oder gemeinsam aufgewickelt sind. Zwischen den Elektroden ist üblicherweise ein sogenannter Separator angeordnet.

Die Elektroden sind in dem Zellengehäuse angeordnet, d.h. von diesem eingehaust und dadurch insbesondere vor äußeren Einflüssen geschützt. Eine Kontaktierung der Elektroden erfolgt über die Terminals, welche hierzu außerhalb des Zellengehäuses angeordnet sind. Alternativ sind die Terminals ein Bestandteil des Zellengehäuses, d.h. die Zelle wird dann direkt über deren Zellengehäuse angeschlossen, welches als Terminal dient. Auch ist eine Kombination denkbar, bei welcher die Zelle einerseits über deren Zellengehäuse als eines der Terminals und ein weiteres, separates Terminal angeschlossen wird. Üblicherweise ist eines der Terminals mit dem Zellengehäuse galvanisch verbunden, sodass das Zellengehäuse auf dem entsprechenden Elektrodenpotential liegt. Das andere Terminal ist dagegen gegen das Zellengehäuse elektrisch isoliert. Am Zellengehäuse ist in einer Ausgestaltung zusätzlich eine Berstmembran angeordnet, welche bei einem Überdruck im Inneren der Zelle zerbirst und dadurch einen Druckausgleich bewirkt. Die Berstmembran stellt dann insbesondere ein mechanisches Sicherungselement dar, im Gegensatz zum elektrischen Sicherungselement im Strompfad, welches vorrangig zur elektrischen Absicherung der Zelle dient.

Eine jeweilige Elektrode ist mit einem der Terminals vorzugsweise über einen sogenannten Ableiter verbunden. Der Ableiter ist aus einem elektrisch leitenden Material gefertigt und mit der Elektrode insbesondere fest verbunden. Der Ableiter ist dann mit dem Terminal verbunden. Insgesamt ergibt sich somit ein Strompfad von dem einen Terminal durch den zugehörigen Ableiter und die daran angeschlossene Elektrode und von dort aus zur anderen Elektrode, über deren Ableiter, bis schließlich zum anderen Terminal. Je nach Lage und Ausgestaltung der Terminals führt der Strompfad ggf. auch über das Zellengehäuse. Entlang dieses Strompfads ist das elektrische Sicherungselement angeordnet, um bei einem Kurzschluss oder in einem Überlastfall eine Unterbrechung des Strompfads herbeizuführen. Im normalen Zustand und Betrieb der Zelle ist der Strompfad demnach durch das Sicherungselement geschlossen, im Überlastfall wird der Strompfad unterbrochen. Ein Überlastfall ist beispielsweise eine zu hohe Spannung oder ein zu hoher Strom. Der Kurzschluss oder der Überlastfall wird vom Sicherungselement erkannt und dieses dann ausgelöst, sodass in der Folge der Strompfad unterbrochen wird.

Das Sicherungselement ist im Strompfad angeordnet, sodass im normalen Betrieb der Zelle durch das Sicherungselement ein Strom fließt. Das Sicherungselement ist zwischen einer der Elektroden und dem dazugehörigen Terminal in den Strompfad integriert. Zur Absicherung der Zelle ist das Sicherungselement dann derart ausgelegt, dass z.B. bei Erreichen eines bestimmten, maximal zulässigen Stroms das Sicherungselement auslöst. Allgemein weist das Sicherungselement zwei Seiten auf, welche durch einen Sicherungspfad verbunden sind, auf welchem beim Auslösen die Unterbrechung erfolgt, sodass die beiden Seiten voneinander galvanisch getrennt sind.

Nach dem Auslösen ist der Strompfad unterbrochen, dennoch ist es aufgrund der speziellen Anordnung des Sicherungselements möglich, den Ladezustand der Zelle von außen zu prüfen ohne die Zelle öffnen zu müssen. Hierzu ist in einer zweckmäßigen Weiterbildung zwischen der Elektrode und dem Sicherungselement in dem Strompfad ein Stromabgriff angeschlossen, welcher außerhalb des Zellengehäuses angeordnet ist. Dadurch lässt sich diejenige Elektrode, welche durch das ausgelöste Sicherungselement nunmehr von dem zugehörigen Terminal getrennt ist weiterhin von außen kontaktieren, nämlich über den Stromabgriff. Dieser ist beispielsweise als Pin oder Anschlusskopf oder nach Art eines Terminals ausgebildet und bildet somit einen Pol der Zelle. Beim Prüfen des Ladezustands wird dann ein geeignetes Prüfgerät an den Stromabgriff und an das andere Terminal angeschlossen, sodass dann bezüglich der Prüfung des Ladezustands das Sicherungselement außerhalb des nunmehr benutzten und verkürzten Strompfads liegt. Gleiches gilt analog für ein Entladen der Zelle nach einem Auslösen des Sicherungselements.

Vorzugsweise ist das Sicherungselement als Schmelzsicherung ausgebildet und dadurch besonders einfach und kostengünstig. Dazu ist das Sicherungselement beispielsweise als Blech mit einem verjüngten Abschnitt als Sicherungspfad ausgebildet, welcher einen bestimmten Querschnitt aufweist, um bei einem entsprechend hohen Strom aufzuschmelzen. Typischerweise beträgt der Querschnitt zwischen 1 und 5 mm², je nach Anwendung können jedoch auch andere Querschnitte geeignet sein. Der Querschnitt definiert einen Auslösestrom, ab welchem das Sicherungselement auslöst. Beispielsweise ist der Querschnitt bei Verwendung der Zelle in einem Verbraucherelektronikgerät für einen Auslösestrom oberhalb von 10 bis 100 A ausgelegt. Im automotiven Bereich ist der Querschnitt beispielsweise für einen Auslösestrom im Bereich von ca. 800 bis 1000 A ausgelegt. Das Sicherungselement ist geeigneterweise aus dem gleichen Werkstoff wir die Elektrode hergestellt.

Bevorzugterweise ist die Zelle innerhalb des Zellengehäuses sicherungsfrei ausgestaltet. Mit anderen Worten: innerhalb des Zellengehäuses ist kein weiteres elektrisches Sicherungselement, insbesondere keine Schmelzsicherung angeordnet oder vorgesehen. Die elektrische Absicherung der Zelle erfolgt somit ausschließlich außerhalb des Zellengehäuses, sodass sichergestellt ist, dass der Strompfad im Inneren der Zelle auch nach Auslösen des externen Sicherungselements intakt bleibt. Zudem weisen Zellen mit einem Sicherungselement innerhalb des Gehäuses häufig den Nachteil auf, dass beim Auslösen, insbesondere Schmelzen des Sicherungselements der Ableiter nicht mehr ausreichend mechanisch angebunden ist. Der Ableiter kann dann ungewollt verkippen und dadurch wieder eine elektrische Verbindung mit einem der Terminals herstellen. Diese Gefahr besteht bei einem Zellengehäuse, welches intern sicherungsfrei ausgebildet ist, vorteilhaft nicht.

Vorliegend ist die Elektrode mit dem Zellengehäuse lediglich über das Sicherungselement galvanisch verbunden und in einem ausgelösten Zustand des Sicherungselements ist die Elektrode vom Zellengehäuse galvanisch getrennt. Dadurch ist vorteilhaft sichergestellt, dass beim Auslösen des Sicherungselements nicht versehentlich eine Rückkontaktierung des Terminals über das Gehäuse erfolgt. Dies ist allgemein von Bedeutung bei einer Zelle, deren Zellengehäuse auf das Elektrodenpotential der Elektrode gelegt ist, und speziell von Bedeutung bei der Verwendung einer Schmelzsicherung.

Hierbei soll im normalen Zustand der Zelle das Zellengehäuse mit der Elektrode galvanisch verbunden sein. Das Terminal ist dann üblicherweise am Zellengehäuse montiert und dadurch mit der Elektrode verbunden. Die Anbindung des Terminals erfolgt somit mittelbar über das Zellengehäuse. Entsprechend ist die Elektrode mit dem Zellengehäuse über das Sicherungselement verbunden. Dazu ist das Sicherungselement auf einer Seite an dem Zellengehäuse angebracht, insbesondere befestigt und auf der anderen Seite z.B. über einen Ableiter mit der Elektrode verbunden. Beim Auslösen einer Schmelzsicherung besteht dann grundsätzlich die Gefahr, dass durch die Erzeugung einer Schmelze zwar die beiden Seiten getrennt werden, jedoch die mit der Elektrode verbundene Seite durch eine ungünstige Tropfenbildung weiterhin mit dem Zellengehäuse und damit wieder mit dem Terminal verbunden wird. Dies wird in der vorgenannten Ausgestaltung verhindert, insbesondere durch die spezielle Anordnung des Sicherungselements relativ zum Zellengehäuse.

Vorzugsweise ist das Sicherungselement derart angeordnet, dass der Sicherungspfad, d.h. bei einer Schmelzsicherung die Verjüngung, vom Zellengehäuse hinreichend beabstandet ist. Unter hinreichend wird insbesondere verstanden, dass zwischen dem Sicherungselement und dem Zellengehäuse ein Zwischenraum ausgebildet ist, welcher groß genug ist, um die beim Auslösen entstehende Schmelze aufzunehmen und/oder abzuleiten ohne eine Rückkontaktierung zu verursachen. Dazu steht beispielsweise der Ableiter außenseitig vom Zellengehäuse ab, und das Sicherungselement ist stufen- oder rampenartig auf das Zellengehäuse herabgeführt.

Geeigneterweise ist das Sicherungselement von einer Abdeckung verdeckt, wodurch insbesondere ein mechanischer Schutz vor Allem für den Sicherungspfad gewährleistet ist. Besonders bei einer Schmelzsicherung dient die Abdeckung zweckmäßigerweise auch dazu, die umliegenden Bauteile in deren vorgesehener Position zu halten und ein ungewolltes Zusammenfallen oder Aneinanderstoßen zu verhindern. Insbesondere dient die Abdeckung weiterhin vorteilhaft zur kontrollierten Führung der Schmelze und verhindert auf diese Weise eine ungewollte Rückkontaktierung. Die Abdeckung ist insbesondere aus einem isolierenden Werkstoff gefertigt. Die Abdeckung ist beispielsweise als Kappe ausgebildet und auf das Sicherungselement aufgesetzt oder aufgesteckt. Zweckmäßigerweise ist die Abdeckung entfernbar, um auf einfache Weise den Zustand des Sicherungselements prüfen zu können. Alternativ oder zusätzlich ist die Abdeckung aus einem transparenten Werkstoff gefertigt.

In einer bevorzugten Ausgestaltung ist die Elektrode mit dem Sicherungselement über einen Ableiter verbunden, welcher durch eine Durchführung im Zellengehäuse von innen nach außen geführt ist. Der Ableiter dient typischerweise zur Kontaktierung und Halterung der Elektrode, welche beispielsweise als Stapel aus mehreren Metallfolien ausgebildet ist. Der Ableiter erstreckt sich somit im Zellengehäuse üblicherweise über die gesamte Breite der Elektrode. In das Zellengehäuse ist eine Durchführung für den Ableiter eingebracht, beispielsweise als einfaches Durchgangsloch. Der Ableiter wird dann mittels eines Führungsfortsatzes, z.B. ein Stift oder ein Bolzen, durch die Durchführung geführt. Der Führungsfortsatz ist aus einem elektrisch leitenden Werkstoff gefertigt, zweckmäßigerweise aus dem gleichen Werkstoff wie der Ableiter.

Zweckmäßigerweise sind der Ableiter und das Sicherungselement unlösbar miteinander verbunden, wodurch die Anordnung besonders robust und insbesondere auch dicht ist. Hierzu ist beispielsweise der Führungsfortsatz als Niet ausbildet und dient somit auch der Befestigung des Sicherungselements und des Ableiters aneinander und am Zellengehäuse. Alternativ sind das Sicherungselement und der Ableiter, alternativ das Sicherungselement und der Führungsfortsatz, einstückig ausgebildet, d.h. als ein einzelnes Teil.

Vorteilhafterweise ist die Durchführung mittels einer Dichtung gegen den Ableiter abgedichtet. Dadurch werden einerseits ein Eindringen von Feuchtigkeit und ein Auslaufen von Elektrolyt verhindert. Andererseits wird insbesondere im Zusammenhang mit der oben beschriebenen Trennung von Elektrode und Gehäuse beim Auslösen durch die Dichtung auch sichergestellt, dass die Elektrode, genauer gesagt der Ableiter, nicht mit dem Zellengehäuse verbunden ist. Die Dichtung dient somit vorteilhaft auch als elektrische Isolierung des Ableiters gegen das Zellengehäuse, sodass diese beiden Teile lediglich mittelbar über das Sicherungselement miteinander verbunden sind. Sinnvollerweise ist die Dichtung daher aus einem elektrisch isolierenden Werkstoff gefertigt, beispielsweise aus PE, PP oder PTFE.

Bevorzugterweise ist das Sicherungselement vom Zellengehäuse mittels einer Isolierung beabstandet. Die Isolierung besteht aus einem elektrisch isolierenden Werkstoff. Dies hat den Vorteil, dass der Strompfad auch tatsächlich durch das Sicherungselement führt und nicht ein ungewollter, alternativer Strompfad ausgebildet ist. Ein weiterer Vorteil ist, dass beim Auslösen der Sicherung keine ungewollte Kontaktierung mit dem Zellengehäuse erfolgt. In einer ersten Variante dient die oben beschriebene Dichtung als Isolierung und somit auch als Rückkontaktierungsschutz. Beispielsweise steht die Dichtung hierzu entsprechend von der Durchführung aus nach außen hervor und beabstandet dadurch den Sicherungspfad vom Zellengehäuse. In einer zweiten und nicht zur Erfindung gehörenden Variante ist die Isolierung als separates Teil ausgebildet und räumlich zwischen dem Sicherungselement und dem Zellengehäuse angeordnet. Dabei sind das Sicherungselement, die Isolierung und das Zellengehäuse, insbesondere ein Deckel des Zellengehäuses, jeweils flach ausgebildet und bilden einen Stapel. In der zweiten Variante ist das Zellengehäuse dann im Strompfad von der Elektrode aus betrachtet noch vor dem Sicherungselement angeschlossen, sodass beim Auslösen des Sicherungselements die Elektrode weiterhin mit dem Zellengehäuse verbunden ist und lediglich das Terminal abgetrennt wird. Das Zellengehäuse verbleibt somit auf Elektrodenpotential, alle an das Terminal angeschlossenen Verbraucher werden jedoch von der Elektrode galvanisch getrennt.

In einer bevorzugten Weiterbildung, insbesondere als Alternative zu einem mit dem Ableiter einstückig ausgebildeten Sicherungselement, ist das Sicherungselement ein separates Bauteil. Das Sicherungselement ist somit austauschbar. Die Zelle ist dadurch vorteilhaft im Rahmen eines modularen Konzepts je nach Bedarf mit einem jeweils geeigneten Sicherungselement konfigurierbar. Bei der Montage der Zelle wird dann aus mehreren Sicherungselementen ein geeignetes ausgewählt und verwendet. Das Sicherungselement ist somit modular. Dies ist insbesondere vorteilhaft im Rahmen von Untersuchungen oder Test mit diversen Sicherungselementen mit beispielsweise unterschiedlichen Geometrien und/oder Querschnitten.

In einer geeigneten Ausgestaltung ist die Elektrode mit dem Sicherungselement über einen Ableiter verbunden und das Sicherungselement ist an dem Ableiter und an dem Terminal mittels jeweils einem Verbindungselement austauschbar befestigt. Hierdurch ist vorteilhaft ein austauschbares Sicherungselement realisiert. Dabei sind die Verbindungselemente insbesondere Standardbauteile, z.B. Schrauben mit Kontermutter, wodurch ein besonders einfaches und kostengünstiges Modulkonzept verwirklicht ist. Die Verbindungselemente sind zweckmäßigerweise jeweils durch eine Durchführung in das Zellengehäuse eingesetzt, wodurch die Anordnung insgesamt besonders robust ist.

Bevorzugterweise ragt dasjenige Verbindungselement, mittels welchem das Sicherungselement am Terminal befestigt ist, zur Befestigung in das Zellengehäuse hinein und ist von diesem durch eine Isolierhülse beabstandet, d.h. das Verbindungselement ist gegen das Zellengehäuse elektrisch isoliert. Dadurch werden mittels dieses Verbindungselements das Terminal und das Sicherungselement zwar am Zellengehäuse befestigt, jedoch durch ebenjenes Verbindungselement nicht mit dem Zellengehäuse elektrisch verbunden. Die elektrische Anbindung erfolgt vielmehr über das Sicherungselement, welches dann insbesondere über das andere Verbindungselement mit dem Ableiter elektrisch verbunden ist.

Die Isolierhülse ist beispielsweise als hohler Bolzen mit einem Innengewinde für das Verbindungselement ausgebildet. Zweckmäßigerweise weist die Isolierhülse einen Kopf auf, welcher innerhalb des Zellengehäuses angeordnet ist und die Durchführung hintergreift, sodass das Verbindungselement von außen in die Isolierhülse einschraubbar ist und beim Befestigen dann das Terminal, das Sicherungselement und insbesondere auch die Isolierung mit dem Zellengehäuse zusammengedrückt werden.

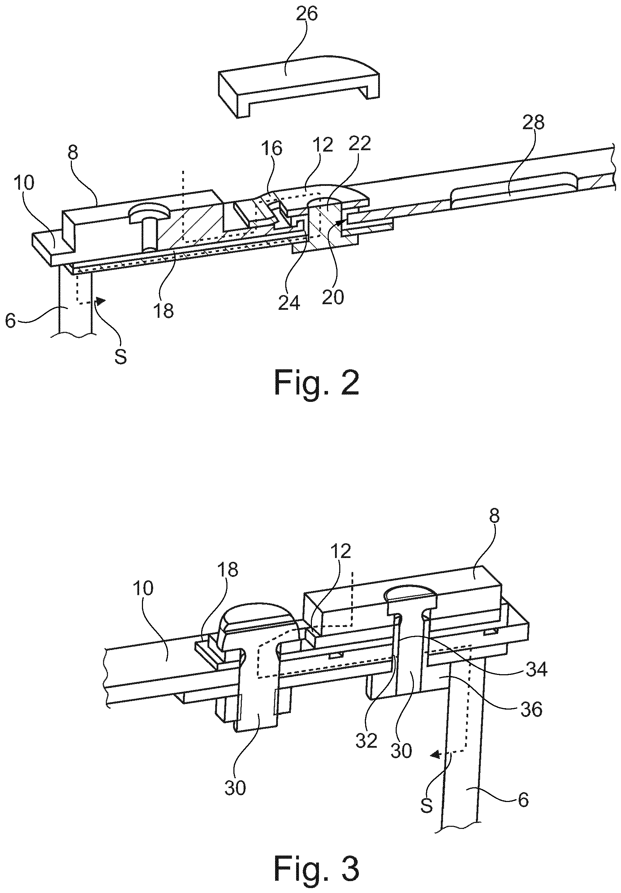

Nachfolgend werden Ausführungsbeispiele der Erfindung anhand einer Zeichnung näher erläutert, wobei Fig. 3 keine Ausführungsform der Erfindung zeigt. Darin zeigen jeweils schematisch:
- Fig. 1: eine Zelle,
- Fig. 2: einen Ausschnitt der Zelle, und
- Fig. 3: einen Ausschnitt einer Variante der Zelle.

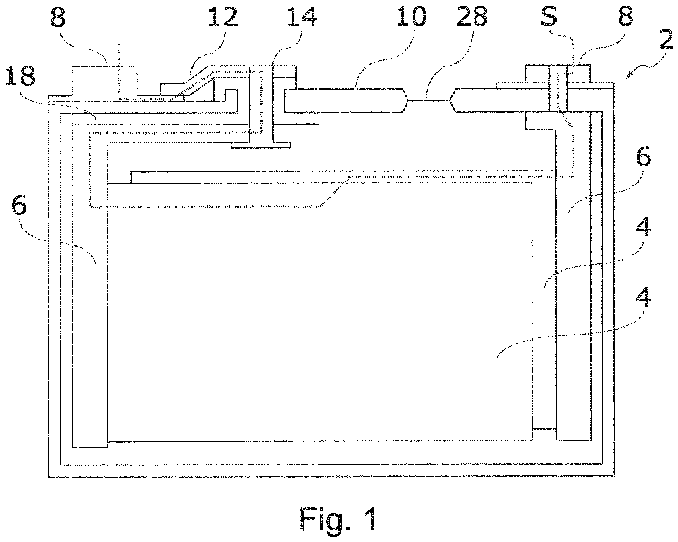

In Fig. 1 ist eine Zelle 2 gezeigt mit zwei Elektroden 4, an welche jeweils ein Ableiter 6 angeschlossen ist, welche wiederum jeweils mit einem Terminal 8 verbunden sind. Die Terminals 8 bilden Endpunkte eines Strompfads S durch die Zelle 2 und somit auch Anschlusspunkte für die Zelle 2, zur Verbindung mit anderen Zellen 2 oder mit einem Verbraucher. Die Elektroden 4 sind in einem Zellengehäuse 10 eingehaust und von diesem vollständig umgeben. Im gezeigten Ausführungsbeispiel bilden die Elektroden 4 einen Stapel, in einer nicht gezeigten Variante sind die Elektroden 4 dagegen aufgewickelt.

Zur Absicherung gegen einen Kurzschluss oder eine Überlastung der Zelle 2 ist im Strompfad S zwischen einer der Elektroden 4 und dem zugehörigen Terminal 8 ein elektrisches Sicherungselement 12 angeordnet, welches hier als Schmelzsicherung ausgebildet ist. Im normalen Zustand der Zelle 2 ist der Strompfad S geschlossen, beim Auslösen des Sicherungselements 12 wird der Strompfad S jedoch am Sicherungselement 12 unterbrochen, wodurch das Terminal 8 von der zugehörigen Elektrode 4 galvanisch getrennt wird. Innerhalb des Zellengehäuses 10 ist dagegen kein elektrisches Sicherungselement angeordnet, d.h. die Zelle 2 ist innerhalb des Zellengehäuses 10 sicherungsfrei ausgestaltet.

Das Sicherungselement 12 ist vorteilhaft als externes Sicherungselement 12 ausgebildet und außerhalb des Zellengehäuses 10 angeordnet, sodass von außen sofort ersichtlich ist, ob das Sicherungselement 12 ausgelöst hat oder nicht. Die Zelle 2 braucht hierzu nicht geöffnet zu werden. Weiterhin kann auch auf einfache Weise auch der Ladezustand der Zelle 2 noch nach dem Auslösen des Sicherungselements 12 ermittelt werden ohne die Zelle 2 öffnen zu müssen. Dazu ist in dem hier gezeigten Ausführungsbeispiel ein Stromabgriff 14 ausgebildet, welcher im Strompfad S zwischen dem Sicherungselement 12 und der Elektrode 4 angeordnet ist sowie außerhalb des Zellengehäuses 10. Über diesen externen Stromabgriff 14 kann die Zelle 2 auch entladen werden, selbst bei ausgelöstem Sicherungselement 12.

In Fig. 2 ist ein Ausschnitt der Zelle 2 im Bereich des Sicherungselements 12 in einer Querschnittansicht näher dargestellt. Deutlich erkennbar ist die Ausgestaltung als Schmelzsicherung mit einer Verjüngung 16, welche beim Auslösen der Sicherung aufschmilzt. Der Ableiter 6 ist hauptsächlich innerhalb des Zellengehäuses 10 angeordnet und zunächst mittels einer Isolierung 18 von diesem galvanisch getrennt. In das Zellengehäuse 10 ist eine Durchführung 20 eingebracht, durch welcher hindurch der Ableiter 6 über einen Führungsfortsatz 22 nach außen geführt ist. Dabei ist der Ableiter 6 mittels einer Dichtung 24 gegenüber der Durchführung 20 abgedichtet und zugleich auch elektrisch isoliert. Auch die Dichtung 24 ist durch die Durchführung 20 hindurchgeführt. Die Dichtung 24 und die Isolierung 18 sind hier ein einzelnes Bauteil, welches aus einem elektrisch isolierenden Werkstoff gefertigt ist.

Außen steht der Ableiter 6, genauer der Führungsfortsatz 22, bezüglich des Zellengehäuses 10 hervor. Hier ist das Sicherungselement 12 am Ableiter 6 befestigt. Das Sicherungselement 12 ist dann rampenartig ausgebildet und vom Führungsfortsatz 22 ausgehend zum Zellengehäuse 10 hin geführt und an dieses angeschlossen, d.h. hier am Zellengehäuse 10 befestigt. Dadurch ist das Zellengehäuse 10 auf das Elektrodenpotential der Elektrode 4 gelegt. Am Zellengehäuse 10 ist dann auch das Terminal 8 befestigt, hier mittels einer nicht näher bezeichneten Schraubverbindung. Beim Auslösen des Sicherungselements 12 schmilzt dann die Verjüngung 16, sodass das Zellengehäuse 10 und das Terminal 8 vom Ableiter 6 und der Elektrode 4 galvanisch getrennt sind. Eine ungewollte Rückkontaktierung durch die beim Auslösen entstehende Schmelze wird insbesondere durch den nach außen hervorstehenden Führungsfortsatz 22 sowie durch die rampenartige Ausgestaltung des Sicherungselements 12 erzielt. Dadurch ist zwischen letzterem und dem Zellengehäuse 10 ein Zwischenraum ausgebildet ist, welcher zum Führungsfortsatz 22 hin durch die Dichtung 24 berandet ist, sodass eine ungewollte Kontaktierung mit dem Zellengehäuse 10 verhindert ist.

Grundsätzlich sind auch andere Ausgestaltungen des Sicherungselements 12 als oben angegeben geeignet, beispielsweise solche, welche nicht alle Merkmale des hier konkret beschriebenen Ausführungsbeispiels zeigen. Wesentlich ist insbesondere, dass der Strompfad S durch das Sicherungselement 12 führt, und dass dieses außerhalb des Zellengehäuses 10 angeordnet ist.

Weiterhin ist in Fig. 2 eine Abdeckung 26 gezeigt, welche auf das Sicherungselement 12 aufgesetzt wird und dieses dann verdeckt sowie gegen äußere Einflüsse schützt. Die Abdeckung 26 ist in Fig. 2 abgehoben gezeigt, um das Sicherungselement 12 sichtbar zu machen. Auch erkennbar ist eine Berstmembran 28, welche abseits des Sicherungselements 12 in das Zellengehäuse 10 eingebracht ist und bei einem Überdruck im Inneren zerbirst.

In Fig. 3 ist ein Ausschnitt einer Variante der Zelle 2 in einer Querschnittansicht gezeigt. Hierbei ist der Ableiter 6 direkt mit dem Zellengehäuse 10 galvanisch verbunden, sodass in Abweichung von der Erfindung selbst nach dem Auslösen des Sicherungselements 12 das Zellengehäuse 10 auf dem Elektrodenpotential der Elektrode 4 bleibt. Dagegen ist das Terminal 8 von dem Zellengehäuse 10 durch eine Isolierung 18 beabstandet und mit dem Zellengehäuse 10 lediglich mittelbar über das Sicherungselement 12 verbunden.

Das Sicherungselement 12 ist in Fig. 3 als separates Teil ausgebildet und austauschbar befestigt, nämlich mittels zweier Verbindungselemente 30, welche hier als Schrauben ausgebildet sind. Dadurch kann bei der Montage der Zelle 2 ein jeweils konkret optimal geeignetes Sicherungselement 12 gewählt und verbaut werden. Das eine Verbindungselement 30 dient sowohl der Befestigung als auch der elektrischen Kontaktierung des Sicherungselements 12 mit dem Zellengehäuse 10 und dem Ableiter 6. Das andere Verbindungselement 30 dient auch zur Befestigung des Terminals 8 und dagegen von einer Isolierhülse 32 umgeben, welche das Terminal 8 und das Sicherungselement 12 gegen das Zellengehäuse 10 und den Ableiter 6 isoliert. Der Strompfad S führt somit von Terminal 8 ausgehend zwangsweise durch das Sicherungselement 12. Die Isolierhülse 32 ist hier mit einem Innengewinde 34 für das Verbindungselement 30 versehen sowie mit einem Kopf 36, welcher innerhalb der Zelle 2 liegt und das Zellengehäuse 10 hintergreift. Insgesamt ist das Sicherungselement 12 durch die Verbindungselemente 30 somit beidseitig befestigt und gesichert.

### Bezugszeichenliste

- 2: Zelle
- 4: Elektrode
- 6: Ableiter
- 8: Terminal
- 10: Zellengehäuse
- 12: Sicherungselement
- 14: Stromabgriff
- 16: Verjüngung
- 18: Isolierung
- 20: Durchführung
- 22: Führungsfortsatz
- 24: Dichtung
- 26: Abdeckung
- 28: Berstmembran
- 30: Verbindungselement
- 32: Isolierhülse
- 34: Innengewinde
- 36: Kopf
- S: Strompfad

## Patentansprüche

1. Zelle (2) für einen elektrischen Energiespeicher, mit einem Zellengehäuse (10), innerhalb welchem eine Elektrode (4) angeordnet ist und an welchem außenseitig ein Terminal (8) angeordnet ist, welches mit der Elektrode (4) galvanisch verbunden ist, wobei in einem Strompfad (S) zwischen dem Terminal (8) und der Elektrode (4) ein elektrisches Sicherungselement (12) angeschlossen ist, zur galvanischen Trennung der Elektrode (4) und des Terminals (8), wobei das Sicherungselement (12) außerhalb des Zellengehäuses (10) angeordnet ist,
**dadurch gekennzeichnet,**
**dass** die Elektrode (4) mit dem Zellengehäuse (10) lediglich über das Sicherungselement (12) galvanisch verbunden ist und dass in einem ausgelösten Zustand des Sicherungselements (12) die Elektrode (4) vom Zellengehäuse (10) galvanisch getrennt ist.

2. Zelle (2) nach dem vorhergehenden Anspruch,
**dadurch gekennzeichnet,**
**dass** zwischen der Elektrode (4) und dem Sicherungselement (12) in dem Strompfad (S) ein Stromabgriff (14) angeschlossen ist, welcher außerhalb des Zellengehäuses (10) angeordnet ist.

3. Zelle (2) nach einem der vorhergehenden Ansprüche,
**dadurch gekennzeichnet,**
**dass** das Sicherungselement (12) als Schmelzsicherung ausgebildet ist.

4. Zelle (2) nach einem der vorhergehenden Ansprüche,
**dadurch gekennzeichnet,**
**dass** diese innerhalb des Zellengehäuses (10) sicherungsfrei ausgestaltet ist.

5. Zelle (2) nach einem der vorhergehenden Ansprüche,
**dadurch gekennzeichnet,**
**dass** die Elektrode (4) innerhalb des Zellengehäuses (10) an einen Ableiter (6) angeschlossen ist und
**dass** das Sicherungselement (12) derart angeordnet ist, dass ein Sicherungspfad (16) des Sicherungselements (12) vom Zellengehäuse (10) hinreichend beabstandet ist, indem der Ableiter (6) außenseitig vom Zellengehäuse (10) absteht und das Sicherungselement (12) stufen- oder rampenartig auf das Zellengehäuse (10) herabgeführt ist.

6. Zelle (2) nach einem der vorhergehenden Ansprüche,
**dadurch gekennzeichnet,**
**dass** das Sicherungselement (12) von einer Abdeckung (26) verdeckt ist.

7. Zelle (2) nach einem der vorhergehenden Ansprüche,
**dadurch gekennzeichnet,**
**dass** die Elektrode (4) mit dem Sicherungselement (12) über einen Ableiter (6) verbunden ist, welcher durch eine Durchführung (20) im Zellengehäuse (10) von innen nach außen geführt ist.

8. Zelle (2) nach dem vorhergehenden Anspruch,
**dadurch gekennzeichnet,**
**dass** der Ableiter (6) und das Sicherungselement (12) unlösbar miteinander verbunden sind.

9. Zelle (2) nach einem der beiden vorhergehenden Ansprüche,
**dadurch gekennzeichnet,**
**dass** die Durchführung (20) mittels einer Dichtung (24) gegen den Ableiter (6) abgedichtet ist.

10. Zelle (2) nach einem der vorhergehenden Ansprüche,
**dadurch gekennzeichnet,**
**dass** das Sicherungselement (12) vom Zellengehäuse (10) mittels einer Isolierung (18) beabstandet ist.

11. Zelle (2) nach einem der vorhergehenden Ansprüche,
**dadurch gekennzeichnet,**
**dass** das Sicherungselement (12) ein separates Bauteil ist.

12. Zelle (2) nach einem der vorhergehenden Ansprüche,
**dadurch gekennzeichnet,**
**dass** die Elektrode (4) mit dem Sicherungselement (12) über einen Ableiter (6) verbunden ist und dass das Sicherungselement (12) an dem Ableiter (6) und an dem Terminal (8) mittels jeweils einem Verbindungselement (30) austauschbar befestigt ist.

13. Zelle (2) nach dem vorhergehenden Anspruch,
**dadurch gekennzeichnet,**
**dass** dasjenige Verbindungselement (30), mittels welchem das Sicherungselement (12) am Terminal (8) befestigt ist, zur Befestigung in das Zellengehäuse (10) hineinragt und von diesem durch eine Isolierhülse (32) beabstandet ist.

## Claims

1. A cell (2) for an electrical energy store, with a cell housing (10), within which an electrode (4) is arranged and on which a terminal (8) is arranged on the outer side which is electrically connected to the electrode (4), wherein an electric protection element (12) is connected in a current path (S) between the terminal (8) and the electrode (4), for electrically isolating the electrode (4) and the terminal (8), wherein the protection element (12) is arranged outside the cell housing (10),
**characterised in that**
the electrode (4) is electrically connected to the cell housing (10) merely by way of the protection element (12), and **in that** in a tripped state of the protection element (12) the electrode (4) is electrically separated from the cell housing (10).

2. A cell (2) according to the preceding claim,
**characterised in that**
a current tap (14) is connected between the electrode (4) and the protection element (12) in the current path (S), which tap is arranged outside the cell housing (10).

3. A cell (2) according to one of the preceding claims,
**characterised in that**
the protection element (12) is formed as a safety fuse.

4. A cell (2) according to one of the preceding claims,
**characterised in that**
it is designed to be fuseless within the cell housing (10).

5. A cell (2) according to one of the preceding claims,
**characterised in that**
the electrode (4) within the cell housing (10) is connected to an outgoing conductor (6), and
**in that** the protection element (12) is arranged such that a protection path (16) of the protection element (12) is sufficiently spaced apart from the cell housing (10) **in that** the outgoing conductor (6) protrudes on the outer side from the cell housing (10) and the protection element (12) is conducted down in step-like or ramp-like manner onto the cell housing (10).

6. A cell (2) according to one of the preceding claims,
**characterised in that**
the protection element (12) is concealed by a covering means (26).

7. A cell (2) according to one of the preceding claims,
**characterised in that**
the electrode (4) is connected to the protection element (12) by way of an outgoing conductor (6) which is brought from the inside to the outside through a lead-through (20) in the cell housing (10).

8. A cell (2) according to the preceding claim,
**characterised in that**
the outgoing conductor (6) and the protection element (12) are joined together non-detachably.

9. A cell (2) according to one of the preceding two claims,
**characterised in that**
the lead-through (20) is sealed off from the outgoing conductor (6) by means of a seal (24).

10. A cell (2) according to one of the preceding claims,
**characterised in that**
the protection element (12) is spaced apart from the cell housing (10) by means of an insulation means (18).

11. A cell (2) according to one of the preceding claims,
**characterised in that**
the protection element (12) is a separate component.

12. A cell (2) according to one of the preceding claims,
**characterised in that**
the electrode (4) is connected to the protection element (12) by way of an outgoing conductor (6), and **in that** the protection element (12) is interchangeably fastened to the outgoing conductor (6) and to the terminal (8) by means of one connecting element (30) in each case.

13. A cell (2) according to the preceding claim,
**characterised in that**
that connecting element (30) by means of which the protection element (12) is fastened to the terminal (8) projects into the cell housing (10) for fastening purposes and is spaced apart therefrom by an insulating sleeve (32).

## Revendications

1. Cellule (2) destinée à un accumulateur d'énergie électrique comprenant un boîtier de cellule (10) à la partie interne duquel est montée une électrode (4) et sur le côté externe duquel est montée une borne (8) qui est reliée galvaniquement à l'électrode (4), dans le chemin du courant (S) entre la borne (8) et l'électrode (4) étant branché un élément de sécurité électrique (12) pour permettre une séparation galvanique de l'électrode (4) et de la borne (8), l'élément de sécurité (12) étant monté à la partie externe du boîtier (10) de la cellule,
**caractérisée en ce que**
l'électrode (4) est reliée galvaniquement au boîtier (10) de la cellule uniquement par l'intermédiaire de l'élément de sécurité (12) et lorsque l'élément de sécurité (12) est déclenché l'électrode (4) est séparée galvaniquement du boîtier (10) de la cellule.

2. Cellule (2) conforme à la revendication précédente,
**caractérisée en ce qu'**
entre l'électrode (4) et l'élément de sécurité (12) est branchée, dans le chemin du courant (S) une prise de courant (14) qui est montée à l'extérieur du boîtier (10) de la cellule.

3. Cellule (2) conforme à l'une des revendications précédentes,
**caractérisée en ce que**
l'élément de sécurité (12) est réalisé sous la forme d'un fusible.

4. Cellule (2) conforme à l'une des revendications précédentes,
**caractérisée en ce qu'**
elle est réalisée sans sécurité à la partie interne du boîtier (10).

5. Cellule (2) conforme à l'une des revendications précédentes,
**caractérisée en ce que**
l'électrode (4) est connectée à un dissipateur (6), à la partie interne du boîtier (10) de la cellule, et
l'élément de sécurité (12) est monté de sorte que son chemin de sécurité (16) soit suffisamment distant du boîtier (10) de la cellule du fait que le dissipateur (6) s'écarte à l'externe du boîtier (10) et que l'élément de sécurité (12) sorte par gradins ou selon une rampe du boîtier (10) de la cellule.

6. Cellule (2) conforme à l'une des revendications précédentes,
**caractérisée en ce que**
l'élément de sécurité (12) est recouvert par un capot (26).

7. Cellule (2) conforme à l'une des revendications précédentes,
**caractérisée en ce que**
l'électrode (4) est reliée à l'élément de sécurité (12) par l'intermédiaire d'un dissipateur (6) qui passe de l'intérieur vers l'extérieur par une passage traversant (20) situé dans le boîtier (10) de la cellule.

8. Cellule (2) conforme à la revendication précédente,
**caractérisée en ce que**
le dissipateur (6) et l'élément de sécurité (12) sont reliés l'un à l'autre de façon inamovibles

9. Cellule (2) conforme à l'une des revendications précédentes,
**caractérisée en ce que**
l'étanchéité du passage (20) vis-à-vis du dissipateur (6) est assurée par l'intermédiaire d'un joint d'étanchéité (24).

10. Cellule (2) conforme à l'une des revendications précédentes,
**caractérisée en ce que**
l'élément de sécurité (12) et écarté du boîtier (10) de la cellule au moyen d'une isolation (18).

11. Cellule (2) conforme à l'une des revendications précédentes,
**caractérisée en ce que**
le élément de sécurité (12) et un composant séparé.

12. Cellule (2) conforme à l'une des revendications précédentes,
**caractérisée en ce que**
l'électrode (4) est reliée à l'élément de sécurité (12) au moyen d'un dissipateur (6) et l'élément de sécurité (12) est respectivement fixé de façon interchangeable au dissipateur (6) et à la borne (8) au moyen d'un élément de liaison (30).

13. Cellule (2) conforme à la revendication précédente,
**caractérisée en ce que**
l'élément de liaison (30) au moyen duquel l'élément de sécurité (12) est fixé à la borne (8) pénètre dans le boîtier (10) de la cellule pour permettre sa fixation et est séparé de celui-ci par un manchon isolant (32).
